# EUROPEAN PATENT SPECIFICATION

(11) **EP 2 192 318 B1**
(45) Date of publication and mention of the grant of the patent: **22.06.2011**
(21) Application number: 08020841.6
(22) Date of filing: 01.12.2008
(51) Int. Cl.: F16D 48/00

(54) **Vehicle drive system with a transmission system and a clutch**
Fahrzeugantriebssystem mit Übertragungssystem und Kupplung
Système de commande de véhicule avec un système de transmission et un embrayage

(43) Date of publication of application: 02.06.2010
(73) Proprietor: GM Global Technology Operations, Inc., Detroit, MI 48265-3000 (US)
(72) Inventor: Kirchner, Eckhard, 19452 Upplands Väsby (SE)
(74) Representative: Strauss, Peter

(56) References cited:
- EP-A- 1 455 107
- DE-A1-102006 010 248
- DE-A1-102006 035 134

## Description

### Background of the invention

The present invention refers to the technical field of automotive technology and more specifically to the field of drives for vehicles.

For decades now for cars and other vehicles drive systems with motors, transmission systems and clutches are state of the art. Transmission systems allow for keeping motor velocity in an appropriate range and at the same time transferring rotation to the wheels in order to achieve the wanted vehicle velocity. For shifting gears mechanical clutches, h-pattern shifters and mechanical transmissions are well known.

In the mean time instead of manually actuated clutches and conventional manual transmissions more and more automatically and semiautomatically actuated clutches and transmissions have been introduced. For example the clutch-by-wire technology allows for using a clutch pedal as actuator with an electrical sensor sensing the mechanical position and transmitting the position of the pedal to a control box that is electrically or hydraulically actuating a clutch unit.

Similar techniques can be used for shifting of the gears that can be initiated by simply hitting buttons on the steering wheel or on the dashboard of a car.

Sometimes problems occur with automatic systems, especially electrical systems, when the system does not work properly. The conventional clutch for example requires to apply a mechanical force to be opened and otherwise is kept closed. This means for example for a vehicle with a clutch by wire system and a by-wire operated stepped transmission, if the control and actuation system do not work, the vehicle itself cannot be pulled or pushed off the street without the motor running because the motor and wheels cannot be separated.

For this case special mechanical unlock mechanisms have to be provided or special safety features like redundancy have to be provided for automatic systems.

The present invention seeks to solve these problems in a simple way with a simple construction. It can be used with advantage for vehicles with automatic or semiautomatic transmission systems, however it can also be used with conventional systems.

From the patent document DE 10 2006 010 248 A1, a clutch system according to the preamble of claim 1 is known, that provides a "normally open"- clutch that is kept mechanically open as long as the clutch is not activated.

### Summary of the invention

The vehicle drive system according to the present invention offers special advantages because without any activity from an automatic control system of the vehicle the clutch is held in a position different from the closed position. Therefore, in case of a failure of the control and actuation system it is possible to move the vehicle even if the motor is not running and if a gear of the transmission system is engaged because the transmission system is not mechanically connected to the motor of the vehicle. It may also be possible to change the gear as long as the clutch is not closed which is the case as long as any automatic control system is not working properly. At the same time, a park lock system is provided that mechanically blocks the transmission system in a parking status and that is automatically activated when the vehicle is not moving and the position of the clutch is in a position different from the closed position.

The invention has special benefits for the use in vehicles with by-wire shifted transmission systems or automated manual transmission systems. With these systems, a change or disengagement of the gear is not possible as long as the automatic control system of the vehicle is not working. Thus the only way of moving the vehicle is with a gear engaged but the clutch disengaged, at least partially.

The system according to the present invention can also be used with advantage in systems with a so called clutch-by-wire system. As soon as the electrical control unit of the clutch fails to work properly, a mechanical elastic forces system makes sure that the clutch is brought into a position where freedom of action is guaranteed.

The invention can be used in a vehicle with a single clutch system as well as in vehicles with dual clutch systems.

In the conventional technique due to the normally closed clutch the transmission system with a gear engaged is often used as a park lock system. As this system does not work with a normally open clutch the invention can well be combined with an additional park lock system that mechanically blocks the transmission system in a parking status. This park lock system can automatically be activated when the vehicle is not moving, the clutch is in a position different from the closed position and, for example, the hand brake is operated.

However it should be ensured that the park lock system can be unlocked manually.

The inventive system of a normally open clutch or at least a normally not closed clutch may be realised by an elastic force mechanism, for example a spring acting against movement of the clutch into the closed position.

This way the automatic control system will, when the system is operating properly, act against the spring force and overcome it to draw the clutch into the closed position and keep it there to guarantee maximum torque transfer. As soon as the automatic system fails, the clutch is drawn into a non closed position by the spring. If the clutch is in a not fully open position, it can be opened fully by the clutch pedal.

For this mechanism an over center spring and a lever can well be used in a range close to the mechanical dead point where a force developed by the spring is relatively small.

### Brief description of the drawings

According to the description below the figures of the drawing show:
- figure 1: a schematic view of a vehicle drive system ac- cording to the invention,
- figure 2: a diagram where the force of the elastic force mechanism is shown versus the travel path of the clutch pedal,
- figure 3: the clutch in an enlarged view and
- figure 4: a conventional clutch in a sectional view.

### Detailed description

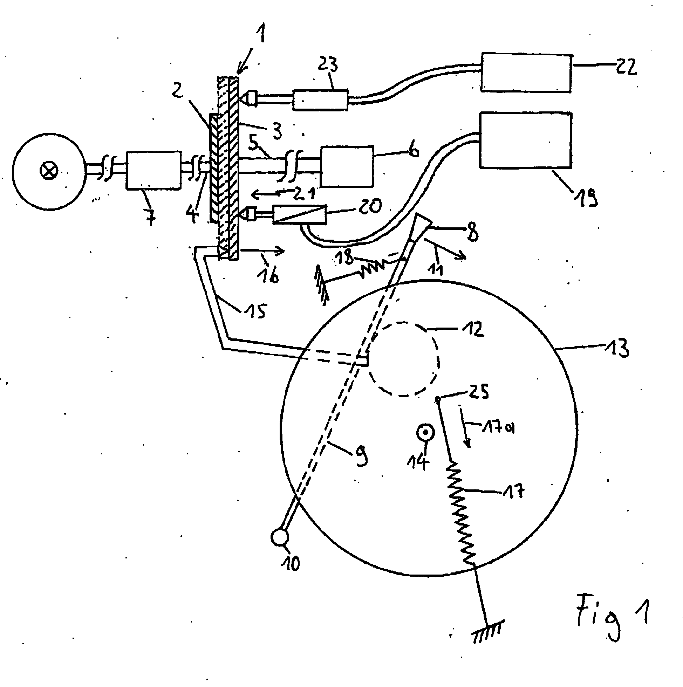

Figure 1 shows a clutch 1 with two circular plates 2, 3 that are connected with axles 4, 5 respectively. The two plates 2, 3 of the clutch 1 can be moved with respect to each other in order to create a distance between them - in the open position of the clutch 1 - or to be in a contact position (kiss point) without distance and with a frictional contact between them in order to transfer torque. One of the axles is connected with a motor 6 of a vehicle, the other axles 4 is connected with a transmission 7 that is connected with the wheels of the vehicle.

A clutch pedal 8 is shown schematically at the end of a lever 9 which is pivotably mounted at a pivoting point 10. When pressing the clutch pedal 8 in direction of an arrow 11, the lever 9 presses against a block 12 that is mounted on a circular plate 13. The circular plate 13 is mounted on a bearing 14 rotatably. The block 12 is connected with an actuating arm 15 that is in contact with the plate 3 of the clutch 1 and serves to open the clutch 1 by pressing in the direction of an arrow 16.

An elastic mechanism is provided at the plate 13 with a spring 17 that has the effect to turn the plate 13 clockwise as the force acting on the plate 13 is in the direction of the arrow 17a. Thus, the spring 17 serves to keep the clutch 1 open. Further opening can be initiated by the clutch pedal 8. The pedal spring 18 generates a well known characteristic of a counter force for the clutch pedal 8.

Under normal operating conditions, the automatic control system 19 of the vehicle activates the actuator 20 that presses the clutch plate 3 in the direction of an arrow 21 against the other clutch plate 2 to bring the clutch 1 in operational position where the two clutch plates 2, 3 are in frictional contact. The force applied by the actuator 20 overcomes the force applied by the spring 17.

As described, when the automatic control system 19 of the vehicle does not work properly, the actuator 20 does not apply any force against the clutch plate 3 and the clutch 1 remains open. So a vehicle can be pushed or pulled because the wheels can roll without moving the motor 6.

To ensure appropriate parking conditions, a park lock system 22 controls a park lock actuator 23 that can apply a force against the clutch plates to close the clutch 1. The park lock system 22 can be constructed in a way that it can be operated manually.

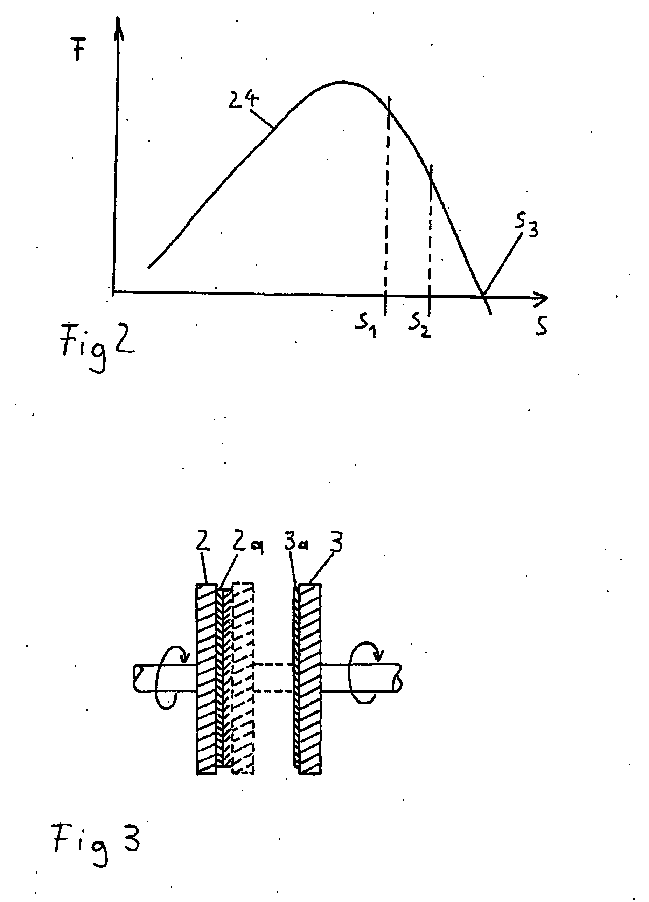

Figure 2 shows in a curve 24 on the vertical axis the force F that is transferred by the operating lever 15 when the actuator 20 is operating and the plate 13 is rotated counterclockwise. When the fixing point 25 travels counterclockwise and is in one straight line with the central bearing 14 of the plate 13 and the spring 17, the spring mechanism is at a dead point where the acting force transferred from the spring 17 to the clutch 1 is zero, in the diagram of Fig. 2 this point is marked with s3. Before reaching that point in the range between s1 and s2 the mechanism can be operated properly, the clutch 1 is kept open by the spring 17 and the actuator 20 has only to overcome a small over center force in order to close the clutch 1 under normal operating conditions.

Figure 3 shows an enlarged view of two clutch plates 2, 3 in a first position with frictional surface layers 2a, 3a separated from each other and in dotted lines with the second clutch plate 3, in a closed position.

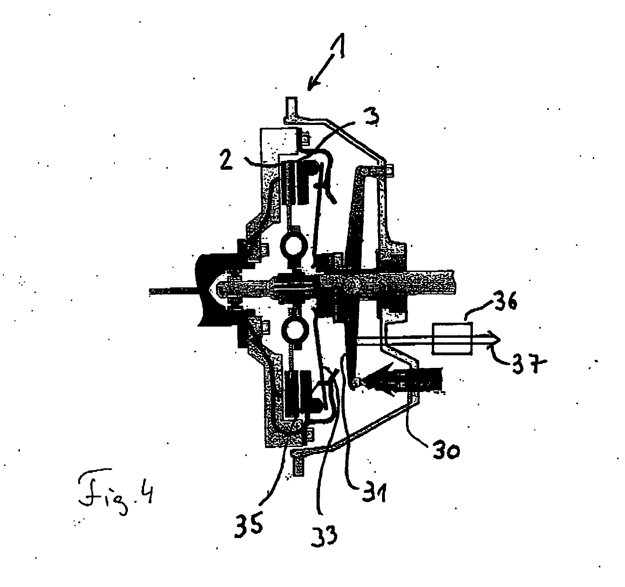

Figure 4 shows a clutch 1 according to the invention in a schematic, sectional view where the clutch plates are marked with 2, 3 and where the clutch 1 is in an open position. This is the result of a force generated for example by a spring mechanism or a spring 30 that is pressing against a lever 31 which acts on a cup spring 33. The cup spring 33 acts against the fixed bearing 35 and gives way to the clutch plates 2, 3.

When the clutch 1 has to be closed, the actuator 36 applies a force in the direction 37 on the lever 31, and the cup spring 33 thus presses against the clutch plates 2, 3 and presses them together.

The invention ensures that in a non operational condition of an actuator 36, the spring 30 keeps the clutch in an open position or at least a non closed position.

So, a vehicle with a gear engaged and a non manual transmission can be pushed or pulled without the motor 6 running.

Also, a motor can be launched by a starter even if the transmission cannot be operated and a gear is engaged.

### List of reference numbers

- 1: clutch
- 2, 3: plate
- 4, 5: axle
- 6: motor
- 7: transmission
- 8: clutch pedal
- 9: lever
- 10: pivoting point
- 11: arrow
- 12: block
- 13: circular plate
- 14: bearing
- 15: actuating arm
- 16: arrow
- 17: spring
- 17a: arrwor
- 18: pedal spring
- 19: automatic control system
- 20: actuator
- 21: arrow
- 22: park lock system
- 23: park lock actuator
- 24: curve
- 30: spring
- 31: lever
- 33: cup spring
- 35: fixed bearing
- 36: actuator
- 37: direction

## Claims

1. Vehicle drive system, comprising a motor (6), a transmission system and a clutch (1),
wherein the clutch (1) comprises a closed position and an open position, wherein the clutch (1) in the closed position is transferring torque between said motor (6) and said transmission system and wherein said clutch (1) in the open position is not transferring substantial torque between said motor (6) and the transmission system, wherein the transmission system comprises a transmission and a shifting system for engaging and disengaging gears, wherein an automatic control system will, when the system is operating properly, draw the clutch into the closed position,
wherein the movement of the clutch (1) from the closed position to the open position requires support from the automatic control system (19) of the vehicle, wherein an elastic force system is provided which mechanically keeps the clutch (1) in a position different from the closed position as long as the automatic control system (19) is inactive, **characterized in that** a park lock system (22) is provided that mechanically blocks the transmission system in a parking status and wherein said park lock system (22) is automatically activated when the vehicle is not moving and the position of the clutch (1) is in a position different from the closed position.

2. Vehicle drive system according to claim 1,
wherein the transmission system comprises a shifting system and wherein the shifting system for a shift action requires support from the automatic control system (19) of the vehicle.

3. Vehicle drive system according to any of the proceeding claims,
wherein the transmission system comprises a by -wire shifting system.

4. Vehicle drive system according to any of the proceeding claims,
wherein the transmission system is an automatic transmission or an automatically supported manual transmission.

5. Vehicle drive system according to any of the proceeding claims,
wherein a single clutch system is provided.

6. Vehicle drive system according to any of the proceeding claims,
wherein a dual clutch system is provided.

7. Vehicle drive system according to claim 6,
wherein the park lock system (11) can be unlocked manually.

8. Vehicle drive system according to any of the proceeding claims,
wherein the elastic force mechanism comprises a spring acting against a movement of the clutch (1) into the closed position.

9. Vehicle drive system according to claim 8,
wherein the spring is linked to a dead point mechanism wherein the resisting force of the spring against movement of the clutch (1) into the closed position is decreasing when the clutch (1) approaches the closed position.

10. Vehicle drive system according to claim 8,
wherein said spring is a disc spring or a cup spring.

## Patentansprüche

1. Fahrzeugantriebssystem, das einen Motor (6), ein Getriebesystem und eine Kupplung (1) umfasst, wobei die Kupplung (1) eine geschlossene Stellung und eine offene Stellung umfasst und die Kupplung (1) in der geschlossenen Stellung ein Drehmoment zwischen dem Motor (6) und dem Getriebesystem überträgt und wobei die Kupplung (1) in der offenen Stellung kein wesentliches Drehmoment zwischen dem Motor (6) und dem Getriebesystem überträgt, wobei das Getriebesystem ein Getriebe und ein Schaltsystem zum Einlegen und Ausrücken von Gängen umfasst, wobei, sofern das System richtig funktioniert, ein automatisches Steuerungssystem die Kupplung in die geschlossene Stellung zieht,
wobei die Bewegung der Kupplung (1) von der geschlossenen in die offene Stellung die Unterstützung des automatischen Steuerungssystems (19) des Fahrzeugs benötigt, wobei ein elastisches Kraftsystem vorgesehen ist, das die Kupplung (1) mechanisch in einer von der geschlossenen Stellung verschiedenen Stellung hält, solange das automatische Steuerungssystem (19) inaktiv ist,
**dadurch gekennzeichnet, dass** ein Parksperrsystem (22) vorgesehen ist, welches das Getriebesystem mechanisch in einem Parkstatus sperrt, und wobei das Parksperrsystem (22) automatisch aktiviert wird, wenn sich das Fahrzeug nicht bewegt und sich die Stellung der Kupplung (1) in einer von der geschlossenen Stellung verschiedenen Stellung befindet.

2. Fahrzeugantriebssystem gemäß Anspruch 1, wobei das Getriebesystem ein Schaltsystem umfasst und wobei das Schaltsystem für einen Schaltvorgang die Unterstützung des automatischen Steuerungssystems (19) des Fahrzeugs benötigt.

3. Fahrzeugantriebssystem gemäß einem der vorangehenden Ansprüche, wobei das Getriebesystem ein (elektronisches) By-wire-Schaltsystem umfasst.

4. Fahrzeugantriebssystem gemäß einem der vorangehenden Ansprüche, wobei das Getriebesystem ein automatisches Getriebe oder ein automatisch unterstütztes manuelles Getriebe ist.

5. Fahrzeugantriebssystem gemäß einem der vorangehenden Ansprüche, wobei ein Einfachkupplungssystem vorgesehen ist.

6. Fahrzeugantriebssystem gemäß einem der vorangehenden Ansprüche, wobei ein Doppelkupplungssystem vorgesehen ist.

7. Fahrzeugantriebssystem gemäß Anspruch 6, wobei das Parksperrsystem (11) manuell entriegelt werden kann.

8. Fahrzeugantriebssystem gemäß einem der vorangehenden Ansprüche, wobei der elastische Kraftmechanismus eine Feder aufweist, die gegen eine Bewegung der Kupplung (1) in die geschlossene Stellung wirksam ist.

9. Fahrzeugantriebssystem gemäß Anspruch 8, wobei die Feder mit einem Totpunktmechanismus verbunden ist, wobei die Widerstandskraft der Feder gegen eine Bewegung der Kupplung (1) in die geschlossene Stellung abnimmt, wenn sich die Kupplung (1) der geschlossenen Stellung nähert.

10. Fahrzeugantriebssystem gemäß Anspruch 8, wobei die Feder eine Teller- oder Schalenfeder ist.

## Revendications

1. Système de commande de véhicule, comprenant un moteur (6), un système de transmission et un embrayage (1),
où l'embrayage (1) comprend une position fermée et une position ouverte, où l'embrayage (1) en position fermée transfère une puissance réelle entre ledit moteur (6) et ledit système de transmission et où ledit embrayage (1) en position ouverte ne transfère pas de puissance substantielle entre ledit moteur (6) et le système de transmission, où le système de transmission comprend une transmission et un système de changement de vitesse pour embrayer et débrayer les vitesses, où un système de contrôle automatique, lorsque le système fonctionne correctement, entraînera l'embrayage en position fermée,
où le mouvement de l'embrayage (1) depuis la position fermée jusqu'à la position ouverte nécessite un soutien du système de contrôle automatique (19) du véhicule, où un système de force élastique est fourni, qui maintient mécaniquement l'embrayage (1) dans une position différente de la position fermée tant que le système de contrôle automatique (19) est inactif,
**caractérisé en ce qu'**un système de verrouillage de stationnement (22) est fourni, qui bloque mécaniquement le système de transmission en état de stationnement et où ledit système de verrouillage de stationnement (22) est automatiquement activé lorsque le véhicule ne bouge pas et la position de l'embrayage (1) est dans une position différente de la position fermée.

2. Système de commande de véhicule selon la revendication 1,
où e système de transmission comprend un système de changement de vitesses et où le système de changement de vitesses pour une action de changement nécessite un soutien à partir du système de contrôle automatique (19) du véhicule.

3. Système de commande de véhicule selon n'importe laquelle des revendications précédentes,
où le système de transmission comprend un système de changement de vitesses par fil.

4. Système de commande de véhicule selon n'importe laquelle des revendications précédentes,
où le système de transmission est une transmission automatique ou une transmission manuelle automatiquement soutenue.

5. Système de commande de véhicule selon n'importe laquelle des revendications précédentes,
où un système d'embrayage simple est fourni.

6. Système de commande de véhicule selon n'importe laquelle des revendications précédentes,
où un système d'embrayage double est fourni.

7. Système de commande de véhicule selon la revendication 6,
où le système de verrouillage de stationnement (11) peut être déverrouillé manuellement.

8. Système de commande de véhicule selon n'importe laquelle des revendications précédentes,
où le mécanisme de force élastique comprend un ressort agissant contre un mouvement de l'embrayage (1) en position fermée.

9. Système de commande de véhicule selon la revendication 8,
où le ressort est lié à un mécanisme de point mort où la force de résistance du ressort contre le mouvement de l'embrayage (1) en position fermée diminue lorsque l'embrayage (1) approche de la position fermée.

10. Système de commande de véhicule selon la revendication 8,
où ledit ressort est un ressort du disque ou un ressort Belleville.
